# Europäisches Patentamt

## European Patent Office

## Office européen des brevets

(19)

(11) Veröffentlichungsnummer: **0 262 261**
**B1**

(12) **EUROPÄISCHE PATENTSCHRIFT**

(45) Veröffentlichungstag der Patentschrift:
20.12.89

(21) Anmeldenummer: 86201708.4

(22) Anmeldetag: 03.10.86

(51) Int. Cl.⁴: **B08B 9/08**

(54) **Strassentankwagen zum Transport flüssiger Stoffe.**

(43) Veröffentlichungstag der Anmeldung:
06.04.88 Patentblatt 88/14

(45) Bekanntmachung des Hinweises auf die Patenterteilung:
20.12.89 Patentblatt 89/51

(84) Benannte Vertragsstaaten:
AT BE CH DE ES FR GB GR IT LI LU NL SE

(56) Entgegenhaltungen:
DE-C- 3 308 201
GB-A- 2 113 535
US-A- 3 810 604
US-A- 4 466 154

Seite 2508 aus Meyers Lexicon der Technik und der
exakten Naturwissenschaften, 1969

(73) Patentinhaber: **Lindenau, Heinz-Herbert,**
**Pfälzerstrasse 76, D-4200 Oberhausen 11(DE)**

(72) Erfinder: **Lindenau, Heinz-Herbert, Pfälzerstrasse 76,**
**D-4200 Oberhausen 11(DE)**

(74) Vertreter: **Ackmann, Günther, Dr.-Ing.,**
**Claubergstrasse 24 Postfach 10 09 22,**
**D-4100 Duisburg 1(DE)**

## Beschreibung

Die Erfindung betrifft einen Straßentankwagen zum Transport von verschiedenartigen chemischen Flüssigkeiten, der ein oder mehrere mit einem Bodenentleerungsventil ausgerüstete Tankkammern aufweist.

Straßentankwagen von Speditionsunternehmen fahren auf einer Tour in der Regel mehrere Lade- und Entladestellen an, wobei nacheinander verschiedenartige Flüssigkeiten, z.B. chemische Flüssigkeiten, zu transportieren sind. Ehe eine neue andere Flüssigkeit geladen werden kann, muß der Tank von innen gereinigt werden. Hierfür gibt es an verschiedenen Orten Reinigungsanlagen, die vor jeder Neubeladung angefahren werden müssen. Diese der Zwischenreinigung dienenden Fahrten von einer Entladestation zur Reinigungsanlage und von dort zur nächsten Beladungsstation sind sehr zeitaufwendig und für die Speditionsunternehmen sehr kostensteigernd. Häufig kommt es sogar vor den von Dienstleistungsunternehmen betriebenen Reinigungsanlagen, die von den Straßentankwagen vieler Speditionen angefahren werden, zu längeren Wartezeiten, die ebenfalls kostentreibend sind und das Einhalten von Lieferterminen im Speditionsbetrieb erschweren. Ein solcher Straßentankwagen ist auf der Seite 2508 aus Meyers Lexikon der Technik und der exakten Naturwissenschaften, 1969, abgebildet. Der fest angebrachte Tank dieses Wagens ist in Tankkammern unterteilt.

Aus der GB-PS 2 113 535 ist eine auf einem Anhängerwagen angeordnete mobile Tankreinigungsanlage bekannt, die an einen zu reinigenden Straßentankwagen o.dgl. herangefahren werden kann. Die Reinigungsflüssigkeit wird mittels einer Pumpe aus einem Vorratsbehälter über einen beheizten Wärmetauscher und eine Hochdruckleitung einer Sprüheinrichtung zugeführt, die in den zu reinigenden Tank eingeführt wird. Eine pumpenfreie Rückförderung der Reinigungsflüssigkeit und der abgespülten Verunreinigungen aus dem Tank in denselben Vorratsbehälter geschieht dadurch, daß im Vorratsbehälter über der Reinigungsflüssigkeit ein Vakuum erzeugt wird, welches auf eine an die Bodenentleerungsöffnung des Tanks angeschlossene Saugleitung einwirkt. Durch Umstellen eines Vierwegeventils baut die Vakuumpumpe in einem von zwei Vorratsbehältern einen Luftdruck auf, der darin befindliche Reinigungsflüssigkeit in den anderen Vorratsbehälter drückt. Bei dieser Ausführung ist in nachteiliger Weise zur Speisung der Sprüheinrichtung eine von der Reinigungsflüssigkeit beaufschlagte Pumpe erforderlich. Dies gilt auch für die aus der US-PS 4 466 154 bekannte Abwandlung, bei der in der Saugleitung Einrichtungen zum Abscheiden der enthaltenen Feststoffanteile vorgesehen sind.

Bei der Belieferung von Ladengeschäften mit Milch-Selbstzapfanlagen bestand der Nachteil, daß mit einem Lastkraftwagen nur eine bestimmte Anzahl in der Molkerei aufgefüllter Selbstzapfanlagen transportiert und ausgeliefert und auch nur eine gleiche Anzahl entleerter Selbstzapfanlagen mit dem LKW zur Molkerei zurückgenommen werden konnten, um sie dort zu, reinigen und für eine erneute Auslieferung zu befüllen. Hierfür ist aus der DE 3 308 201 C1 bekannt, die Selbstzapfanlagen unmittelbar auf dem Lieferfahrzeug zu befüllen und das Fahrzeug mit einem größeren Milchtank und einer Reinigungseinrichtung für die Selbstzapfanlagen zu versehen, so daß eine auf das Fahrzeug gestellte entleerte Selbstzapfanlage während der Fahrt zum nächsten Ladengeschäft gereinigt und gefüllt und am Ziel ausgeliefert werden kann. Diese bekannte Reinigungseinrichtung umfaßt einen Frischwassertank, dessen Inhalt mittels einer Pumpe durch die Selbstzapfanlage in einen Schmutzwassertank gefördert wird. Die Reinigungsanlage dient der Reinigung einer Milch-Selbstzapfanlage, erlaubt jedoch keine Reinigung des eigentlichen Milchtanks, der in der Molkerei gereinigt werden muß. Zum Reinigen von Straßentankwagen, mit denen verschiedenartige flüssige chemische Stoffe transportiert werden, die häufig chemisch aggressiv sind, ist eine solche fahrende Befüllungsstation für Milch-Selbstzapfanlagen nicht geeignet.

Demgegenüber liegt der Erfindung die Aufgabe zugrunde, einen Straßentankwagen der gattungsgemäßen Art derart auszubilden, daß der entleerte Tank bzw. dessen entleerte Kammern während der Fahrt für eine neue Beladung bzw. Füllung mit flüssigem Transportgut gereinigt werden.

Zur Lösung dieser Aufgabe ist der Straßentankwagen mit einer Tankreinigungseinrichtung versehen, bei der im Dom jeder Tankkammer eine Sprühdüse angeordnet ist, die über eine Speiserohrleitung an einen von Druckluft beaufschlagten Druckbehälter für eine Reinigungsflüssigkeit angeschlossen ist und bei der die Bodenentleerungsventile über eine Ablaufrohrleitung an wenigstens einen Auffangbehälter für die Reinigungsflüssigkeit angeschlossen sind.

Mit Hilfe der Tankreinigungsanlage kann der Tank nach der Entleerung während der Fahrt zur nächsten Beladungsstation gereinigt werden. Die häufig aggressive Reinigungsflüssigkeit wird durch den auf den Druckbehälter einwirkenden Luftdruck über die Sprühdüsen in den Innenraum des Tanks bzw. der Tankkammern gefördert, wodurch eine Beschädigung empfindlicher Förderpumpen o. dgl. entfällt. Die Reinigungsflüssigkeit wäscht oder löst den an der Innenwandung haftenden Rest des letzten Transportgutes ab, und die damit beladene Waschflüssigkeit bzw. Lösung läuft über die Bodenentleerungsventile in einen Auffangbehälter. Nach der Reinigung kann der Tank mit einer neuen Transportflüssigkeit, die sich von der zuvor transportierten völlig unterscheiden kann, gefüllt werden. Da die Reinigung während der Fahrt des Kraftfahrzeuges geschehen kann, entfällt auch die Anfahrt zu einer ortsfesten Reinigungsanlage.

Eine einfache Förderung der Reinigungsflüssigkeit wird dadurch geschaffen, daß der Druckbehälter für die Reinigungsflüssigkeit über ein Ventil an einen mit einer Druckluftpumpe ausgerüsteten Druckluftbehälter angeschlossen ist. Auf diese Weise kommt die häufig aggressive Reinigungsflüssigkeit nicht mit beweglichen Teilen von Förderpumpen in Berührung; sowohl der Druckbehälter wie auch die Speiserohrleitung können aus einem gegen chemische Reaktionen beständigen Werkstoff, z. B. Edelstahl, bestehen.

In zahlreichen Anwendungsfällen kann es zweckmäßig sein, die Reinigungsflüssigkeit mehrmals im Kreislauf in den Tank bzw. die Tankkammern zu sprühen. Hierfür werden den oder die Auffangbehälter über ein Mischventil an die Speiserohrleitung für die Sprühdüsen und über ein Ventil an den Druckluftbehälter angeschlossen. Um zu ermöglichen, daß von mehreren Tankkammern nur einer oder einige gereinigt werden, ist in der Speiserohrleitung vor jeder Sprühdüse ein Sperrventil angeordnet.

Bei bestimmten Transportflüssigkeiten kann es passieren, daß im Tank Feststoffteilchen oder Dickstoff als Rest verbleibt. Um diesen von der umlaufenden Reinigungs- bzw. Waschflüssigkeit abzutrennen und die Reinigungs- bzw. Waschkraft zu verlängern, ist die Ablaufrohrleitung vorzugsweise mit einem Abscheider versehen, dessen Feststoff- bzw. Dickstoffableitung über ein Ventil in einen Auffangbehälter und dessen Flüssigstoffableitung in einen weitern Auffangbehälter oder in den Druckbehälter mündet. Weiterhin besteht die Möglichkeit, den Druckbehälter für die Reinigungsflüssigkeit und den oder die Auffangbehälter über je ein Mischventil an die Speiserohrleitung anzuschließen. Diese Ausbildung erlaubt, der umlaufenden Reinigungs- bzw. Waschflüssigkeit dosiert frische Reinigungsflüssigkeit zuzumischen.

Vorzugsweise sind der oder die Auffangbehälter mit einer Heizeinrichtung versehen. Hierdurch läßt sich einerseits eindickende Reinigungs- bzw. Waschflüssigkeit liquide halten, anderseits aber auch Reinigungsflüssigkeit, z. B. Wasser, verdampfen und zur Erhöhung der Reinigungswirkung dampfförmig über die Sprühdüsen in den Tank bzw. die Tankkammern einblasen.

Sowohl der Druckbehälter für die Reinigungsflüssigkeit wie auch der oder die Auffangbehälter können in der Art von Containern austauschbar am Rahmen des Straßentankwagens befestigt sein. Auf diese Art und Weise kann der entleerte Druckbehälter schnell durch einen neuen, mit Reinigungsflüssigkeit gefüllten Durckbehälter ersetzt werden; ebenso lassen sich aber auch die mit verschmutzter Reinigungs- bzw. Waschflüssigkeit gefüllten Auffangbehälter durch leere Auffangbehälter ersetzen. Das Nachfüllen der Druckbehälter bzw. das Entleeren der Auffangbehälter kann dann am Autohof des Speditionsunternehmens geschehen.

Fig. 1 einen erfindungsgemäß ausgerüsteten Straßentankwagen und
Fig. 2 die Anordnung der Rohrleitungen in einem Rohrschaltplan.

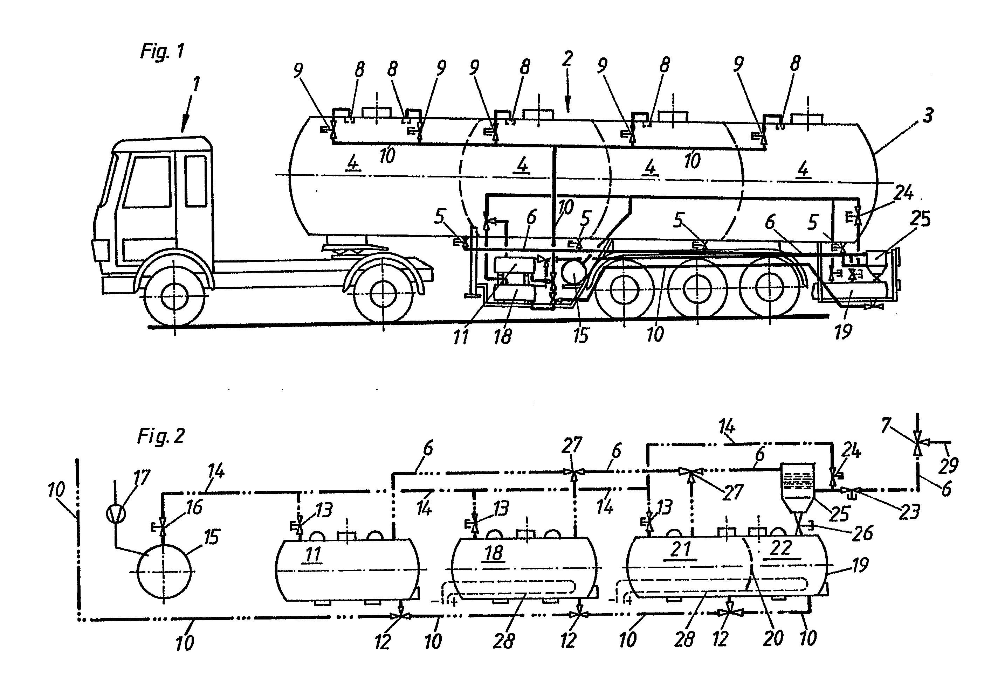

Der in Fig. 1 dargestellte Straßentankwagen ist beispielsweise als Sattelfahrzeug ausgebildet, das aus einem Sattelschlepper 1 und einem Sattelanhänger 2 besteht. Auf dem Sattelanhänger 2 ist ein Tank 3 angeordnet, der durch Schottenwände in vier Tankkammern 4 unterteilt ist. Jede Tankkammer 4 ist mit einem Bodenentleerungsventil 5 versehen, die an eine Ablaufrohrleitung 6 anschließen. Der Inhalt jeder Tankkammer 4 kann somit über das zugehörige Bodenentleerungsventil 5, die Ablaufrohrleitung 6, ein Dreiwegeventil 7 und ein Entleerungsrohr 29 mittels einer in der Zeichnung nicht dargestellten Entleerungsarmatur entleert werden. Um den nach der Entleerung noch an der Innenwandung bzw. dem Boden des Tanks 3 bzw. der Tankkammern 4 vorhandenen Rest der Transportflüssigkeit zu entleeren, ist der Straßentankwagen mit einer Tankreinigungseinrichtung ausgerüstet, die also am Fahrzeug angebracht ist und während der Fahrt des Fahrzeuges in Betrieb genommen werden kann.

Zur Tankreinigungseinrichtung gehören Sprühdüsen 8. Im Dom jeder Tankkammer 4 ist wenigstens eine Sprühdüse 8 angeordnet. Die Sprühdüsen 8 sind über je ein Sperrventil 9 an eine Speiserohrleitung 10 angeschlossen, die über ein Mischventil 12 zu einem mit Reinigungsflüssigkeit gefüllten Druckbehälter 11 führt. Die Art der im Druckbehälter 11 enthaltenen Reinigungsflüssigkeit wird in Abhängigkeit von der Transportflüssigkeit ausgewählt. Je nach der Art der Transportflüssigkeit können lösende und/oder waschende Reinigungsflüssigkeiten Verwendung finden. Die Reinigungsflüssigkeit wird durch Druckluft zu den Sprühdüsen 8 gefördert. Hierfür ist der Druckbehälter 11 über ein Ventil 13, eine Druckluftleitung 14 und ein Ventil 16 an einen Druckluftbehälter 15 angeschlossen, in dem mittels einer Druckluftpumpe 17 ein vorbestimmter Luftdruck aufrechterhalten wird, der zur Förderung der Reinigungsflüssigkeit zu den Sprühdüsen 8 und zur intensiven Versprühung benötigt wird.

Weiterhin gehören zur Tankreinigungseinrichtung zwei Auffangbehälter 18,19, welche die durch die Tankkammern 4 geströmte Reinigungs- bzw. Waschflüssigkeit aufnehmen. die durch die Bodenentleerungsventil 5 und die Ablaufrohrleitung 6 abfließende Reinigungs bzw. Waschflüssigkeit wird hinter dem Dreiwegeventil 7 über ein Ventil 23, einen Abscheider 25 und Dreiwegeventil 27 wahlweise in eine durch eine Trennwand 20 gebildete linke Kammer 21 des Auffangbehälters 19, den Auffangbehälter 18 oder den Druckbehälter 11 eingeleitet. Die in dem Abscheider 25 abgetrennten Feststoff- bzw. Dickstoffteilchen werden über ein Ventil 26 in die andere Kammer 22 abgeleitet. Zur Entleerung kann der Abscheider 25 bei geschlossenem Ventil 23 über die Druckleitung 14 und das Ventil 24 mit Druckluft beaufschlagt werden.

Die Auffangbehälter 18,19 sind über Mischventil 12 an die Speiserohrleitung 10 angeschlossen. Desgleichen sind sie über Ventile 13 an die Druckluftleitung 14 angeschlossen. Diese Ausbildung gestattet einen Kreislauf der Reinigungsflüssigkeit. So besteht beispielsweise die Möglichkeit, zunächst aus dem Druckbehälter 11 Reinigungsflüssigkeit über das Mischventil 12 zu den Sprühdüsen 8 zu fördern. Die Reinigungsflüssigkeit reinigt die Innenwände der Tankkammern 4 durch Lösen oder Abwaschen, und die mit den gelösten bzw. abgewaschenen Reststoffen versetzte Reinigungsflüssigkeit wird z. B. von dem Auffangbehälter 18 aufgenommen. Anschließend kann das Mischventil 12 des Druckbehälters 11 geschlossen und das Mischventil 12 des Auffangbehälters 18 geöffnet werden. Wird das Ventil 13 des Auffangbehälters 18 geöffnet, wird die darin befindliche Reinigungs- bzw. Waschflüssigkeit im Kreislauf erneut über die Speiserohrleitung 10 den Tankkammern 4 zugeführt. Enthält die Reinigungs- oder Waschflüssigkeit Feststoffe oder Dickstoffe, können diese im Abscheider 25 abgetrennt werden.

Bedarfsweise können die Auffangbehälter 18,19 mit einer Heizeinrichtung 28 ausgerüstet werden, um entweder eingedickte Flüssigkeit dünnflüssiger, oder die Reinigungs-bzw. Waschflüssigkeit reinigungsaktiver zu machen, oder diese zu verdampfen. Wahlweise kann der Auffangbehälter 18 so ausgerüstet sein, daß er Reinigungsflüssigkeit kann entweder zugemischt werden, oder sie kann im Kreislauf über diesen Auffangbehälter 18 geführt werden.

## Patentansprüche

1. Straßentankwagen zum Transport von verschiedenartigen chemischen Flüssigkeiten, der ein oder mehrere mit einem Bodenentleerungsventil (5) ausgerüstete Tankkammern (4) aufweist, dadurch gekennzeichnet, daß der Straßentankwagen mit einer Tankreinigungseinrichtung versehen ist, bei der im Dom jeder Tankkammer (4) eine Sprühdüse (8) angeordnet ist, die über eine Speiserohrleitung (10) an einen von Druckluft beaufschlagten Druckbehälter (11) für eine Reinigungsflüssigkeit angeschlossen ist und bei der die Bodenentleerungsventile (5) über eine Ablaufrohrleitung (6) an wenigstens einen Auffangbehälter (18, 19) für die Reinigungsflüssigkeit angeschlossen sind.

2. Straßentankwagen nach Anspruch 1, dadurch genennzeichnet, daß der Druckbehälter (11) für die Reinigungsflüssigkeit über ein Ventil (13) an einen mit einer Druckluftpumpe (17) ausgerüsteten Druckluftbehälter (15) angeschlossen ist.

3. Straßentankwagen nach Anspruch 2, dadurch gekennzeichnet, daß der oder die Auffangbehälter (18,19) über ein Mischventil (12) an die Speiserohrleitung (10) für die Sprühdüsen (8) und über ein Ventil (13) an den Druckbehälter (11) angeschlossen sind.

4. Straßentankwagen nach einem der Ansprüche 1 bis 3, dadurch gekennzeichnet, daß in der Speiserohrleitung (10) vor jeder Spühdüse (8) ein Sperrventil (9) angeordnet ist.

5. Straßentankwagen nach einem der Ansprüche 1 bis 4, dadurch gekennzeichnet, daß die Ablaufrohrleitung (6) mit einem Abscheider (25) versehen ist, dessen Feststoff- bzw. Dickstoffableitung über ein Ventil (26) in einen Auffangbehälter (19) und dessen Flüssigstoffableitung in einen weiteren Auffangbehälter (18, 21) oder in den Druckbehälter (11) mündet.

6. Straßentankwagen nach einem der Ansprüche 1 bis 5, dadurch gekennzeichnet, daß der Druckbehälter (11) für die Reinigungsflüssigkeit und der oder die Auffangbehälter (18,19) über je ein Mischventil (12) an die Speiserohrleitung (10) angeschlossen sind.

7. Straßentankwagen nach einem der Ansprüche 1 bis 6, dadurch gekennzeichnet, daß der oder die Auffangbehälter (18,19) mit einer Heizeinrichtung (18) versehen sind.

8. Straßentankwagen nach einem der Ansprüche 1 bis 7, dadurch gekennzeichnet, daß der Druckbehälter (11) für die Reinigungsflüssigkeit und/oder der oder die Auffangbehälter (18,19) austauschbar am Rahmen des Straßentankwagens befestigt sind.

## Claims

1. Road tanker, for transporting various chemical liquids which comprises one or a plurality of tank chamber(s) (4) provided with a bottom drain valve (5), characterised in that the road tanker is provided with tank cleaning device comprising a spray nozzle (8) which is arranged in the dome of each tank chamber (4) and is connected via a feed pipe (10) to a pressure vessel (11), which is acted upon by compressed air, for a cleaning liquid, the bottom drain valves (5) being connected via a discharge pipe (6) to at least one collecting vessel (18, 19) for the cleaning liquid.

2. Road tank according to claim 1, characterised in that the pressure vessel (11) for the cleaning liquid is connected to a compressed-air vessel (15), which is provided with a compressed-air pump (17), via a valve (13).

3. Road tanker according to claim 2, characterised in that the collecting vessel or vessels (18, 19) is/are connected via a mixer valve (12) to the feed pipe (10) for the spray nozzles (8) and via a valve (13) to the pressure vessel (11).

4. Road tanker according to one of claims 1 to 3, characterised in that a check valve (9) is arranged in the feed pipe (10) before each spray nozzle (8).

5. Road tanker according to one of claims 1 to 4, characterised in that the discharge pipe (6) is provided with a separator (25), tile solid of thick matter drain of which leads via a valve (26) into a collecting vessel (19) and the liquid matter drain of which leads into a further collecting vessel (18, 21) or into the pressure vessel (11).

6. Road tanker according to one of claims 1 to 5, characterised in that the pressure vessel (11) for the cleaning liquid and the collecting vessel or vessels (18, 19) are connected via a respective mixer valve (12) to the feed pipe (10).

7. Road tanker according to one of claims 1 to 6, characterised in that the collecting vessel or vessels (18, 19) is/are provided with a heating device (28).

8. Road tanker according to one of claims 1 to 7, characterised in that the pressure vessel (11) for the cleaning liquid and/or the collecting vessel or vessels (18, 19) is/are secured to the chassis of the road tanker in a replaceable manner.

## Revendications

1. Camion-citerne routier destiné à transporter des produits chimiques liquides, de nature différente, et comportant une ou plusieurs chambres de citerne (4), munies d'une vanne de vidange par le fond (5), caractérisé en ce que le camion-citerne est muni d'un dispositif de nettoyage de citerne, dans lequel, dans le dôme de chaque chambre de citerne (4), est montée une buse de projection (8), qui communique, par un conduit d'alimentation (10), avec un réservoir sous pression (11) destiné à un liquide de nettoyage et alimenté en air comprimé, et dans lequel les vannes de vidange par le fond (5) communiquent, par un conduit d'évacuation (6), avec au moins un réservoir collecteur (18, 19) destiné au liquide de nettoyage.

2. Camion-citerne routier suivant la revendication 1, caractérisé en ce que le réservoir sous pression (11) destiné au liquide de nettoyage communique, par une vanne (13), avec un réservoir d'air comprimé (15) muni d'une pompe à air comprimé (17).

3. Camion-citerne routier suivant la revendication 2, caractérisé en ce que le ou les réservoirs collecteurs (18, 19) communiquent, par une vanne de mélange (12), avec le conduit d'alimentation (10) des buses de projection (8) et, par une vanne (13), avec le réservoir sous pression (11).

4. Camion-citerne routier suivant l'une des revendications 1 à 3, caractérisé en ce que, une vanne d'arrêt (9) est montée dans le conduit d'alimentation (10), en amont de chaque buse de projection (8).

5. Camion-citerne routier suivant l'une des revendications 1 à 4, caractérisé en ce que le conduit d'évacuation (6) est muni d'un séparateur (25), dont le conduit d'évacuation des matières solides et des substances épaisses débouche, par une vanne (26), dans un réservoir collecteur (19) et dont le conduit pour les substances liquides débouche dans un autre réservoir collecteur (18, 21) ou dans le réservoir sous pression (11).

6. Camion-citerne routier suivant l'une des revendications 1 à 5, caractérisé en ce que le réservoir sous pression (11) destiné au liquide de nettoyage et le ou les réservoirs collecteurs (18, 19) communiquent respectivement, par l'intermédiaire d'une vanne de mélange (12), avec le conduit d'alimentation (10).

7. Camion-citerne routier suivant l'une des revendications 1 à 6, caractérisé en ce que le ou les réservoirs collecteurs (18, 19) sont munis d'un dispositif de chauffage (28).

8. Camion-citerne routier suivant l'une des revendications 1 à 7, caractérisé en ce que le réservoir sous pression (11) destiné au liquide de nettoyage et/ou le ou les réservoirs collecteurs (18, 19) sont fixés, de manière amovible, sur le châssis du camion-citerne.

EP 0 262 261 B1

Fig. 1

Fig. 2